# FASCICULE DE BREVET EUROPEEN

(11) **EP 3 516 851 B1**
(45) Date de publication et mention de la délivrance du brevet: **29.05.2024**
(21) Numéro de dépôt: 17784361.2
(22) Date de dépôt: 21.09.2017
(51) Int. Cl.: H04W 4/12, H04W 4/14, H04L 67/54, H04L 51/10, H04L 51/043, H04L 51/58

(54) **PROCÉDÉS D'ÉCHANGE DE MESSAGES ET DE GESTION DE MESSAGES, TERMINAL ET SERVEUR DE MESSAGERIE**
VERFAHREN ZUM AUSTAUSCH VON NACHRICHTEN UND ZUR VERWALTUNG VON NACHRICHTEN, ENDGERÄT UND NACHRICHTENSERVER
METHODS FOR EXCHANGING MESSAGES AND MANAGING MESSAGES, TERMINAL AND MESSAGING SERVER

(30) Priorité: 23.09.2016 FR 1658948
(43) Date de publication de la demande: 31.07.2019
(60) Demande divisionnaire: 24168651.8
(73) Titulaire: Orange, 92130 Issy-les-Moulineaux (FR)
(72) Inventeur: LE ROUZIC, Jean-Claude, 92326 Châtillon cedex (FR); BAILLY, Marc, 92326 Châtillon cedex (FR); GESTRAUD, Yann, 92326 Châtillon cedex (FR)
(86) Numéro de dépôt international: PCT/FR2017/052534
(87) Numéro de publication internationale: WO 2018/055293

(56) Documents cités:
- V1 ET AL: "GSM Association Non-confidential Official Document RCC.61 -RCS Common Core Service Description Document RCS Common Core Service Description Document Security Classification: Non-confidential GSM Association Non-confidential Official Document RCC.61 -RCS Common Core Service Description Document", , 16 septembre 2014 (2014-09-16), XP055253981, Extrait de l'Internet: URL:http://www.gsma.com/network2020/wp-con tent/uploads/2014/07/RCS-Common-Core-SDD-V 1.0.pdf

## Description

L'invention concerne la communication par messages. En particulier, l'invention concerne la communication par messages telle que prévue par la norme de téléphonie mobile RCS (Rich Communication Services en anglais).

L'un des services proposés par la norme de téléphonie mobile RCS est la messagerie enrichie ou « rich messaging » en anglais. Ce service de messagerie permet aux utilisateurs d'échanger des messages textes ou multimédia. Par défaut, la norme RCS, comme d'autres services de messagerie instantanée, est basée sur le protocole IP nécessitant une connexion sur un réseau de données ou connectivité data.

Le principal inconvénient pour des utilisateurs de téléphone mobile, smartphone... de ce type de messagerie est que la connexion au réseau de données est souvent fluctuante en raison du caractère nomade des terminaux utilisés pour accéder au service de messagerie sur IP. Par exemple, lorsqu'un terminal d'un utilisateur A envoie un message IP à un terminal d'un utilisateur B, si le téléphone du destinataire B du message IP n'est pas connecté au réseau de données, le terminal du destinataire B ne recevra pas le message IP qui lui est destiné. C'est pourquoi, la norme RCS prévoit une fonctionnalité de stockage et transfert, dite « Store & Forward » en anglais, qui permet au serveur de messagerie du réseau de données de conserver le message IP jusqu'à ce que le téléphone du destinataire B retrouve une couverture data, c'est-à-dire qu'il se reconnecte au réseau de données. Le serveur de messagerie poussera alors le message IP conservé vers le téléphone du destinataire B.

La fonction « Store & Forward » permet donc de palier les couvertures réseaux fluctuantes mais pas l'absence d'accès au réseau de données pendant une longue période (désactivation de l'utilisation du réseau de données, notamment en « roaming », c'est-à-dire lorsque le terminal du destinataire B utilise le réseau d'un opérateur partenaire de l'opérateur auprès duquel il s'est abonné, par exemple à l'étranger). En effet, même si le terminal du destinataire B récupère le message IP qui lui était destiné après cette longue période, la messagerie proposée perd de son intérêt puisqu'elle perd son caractère dit « instantané ». Pour cela, la norme RCS a prévu un mode de repli : l'échange des messages par SMS utilisant donc un réseau de repli, en l'occurrence le réseau de téléphonie mobile ou réseau cellulaire. Ainsi, lorsque le message IP envoyé par le terminal de l'utilisateur A n'est pas transmis au terminal de l'utilisateur B car celui-ci n'est pas connecté au réseau de données, le terminal de l'utilisateur de A réémet le message sous forme SMS vers le terminal de l'utilisateur B. Le terminal de l'utilisateur A a alors basculé en mode de transmission SMS pour le terminal de l'utilisateur B. Pour éviter que le terminal de l'utilisateur A ne continue à émettre les messages sous forme de SMS même lorsque le terminal de l'utilisateur B se sera reconnecté au réseau de données, la norme RCS a prévu une vérification de la connexion du terminal de l'utilisateur B par polling. Ainsi, le terminal de l'utilisateur A en mode de transmission SMS pour un terminal d'un utilisateur B, vérifie la connectivité IP du terminal de l'utilisateur B. Pour des capacités entre terminaux IP par des messages prédéfinis par la norme RCS dits « SIP OPTIONS » et une analyse des réponses. L'inconvénient de la méthode de polling est qu'elle est consommatrice de ressources.

La politique actuelle de combinaison des services de chat ou messagerie instantanée IP et de SMS (dit « messaging ») selon la norme RCS est basée sur les principes suivants :
- Utilisation du chat comme service de messagerie par défaut vers un terminal du contact B ayant préalablement été découvert comme supportant les services RCS ;
- Repli vers le SMS pour les communications par messages avec le terminal du contact B dès lors qu'un message Chat ou message IP n'a pas pu être délivré au terminal de l'utilisateur B en utilisant le réseau IP avec révocation du message de la base de « Store & Forward » pour éviter tout doublon de message ;
- Lorsque le repli est activé, utilisation des messages SIP OPTIONS ou de tout autre évènement traduisant un retour sous connectivité IP du terminal de l'utilisateur B (par exemple, réception d'un message de Chat provenant du terminal de l'utilisateur B, etc.) pour déterminer quand le retour au service nominal de Chat peut être effectué.

Cette politique permet d'optimiser l'utilisation des messages SIP OPTIONS mais ceux-ci restent néanmoins indispensables.

De manière simplifié, le document « RCS Common Core Service Description Document, version 1.0 » daté du 16 septembre 2014 de GSM Association Non-confidential Official Document RCC.61 décrit plusieurs cas d'usage d'échange de messages entre deux parties : un émetteur 1 et un récepteur B. Le service de messagerie utilisé pour transmettre les messages est fonction des statuts de connectivité de l'émetteur A et du récepteur B. En particulier, si un émetteur A échange au moyen d'une messagerie RCS puis qu'il perd sa connexion IP permettant l'utilisation de la messagerie RCS, les messages seront alors échangés en xMS. Lorsque l'émetteur A récupère sa connexion IP, si le récepteur B a commencé à échanger des messages avec 1 en xMS, alors ce document ne prévoit pas un retourdes échanges de messages entre ces deux terminaux en RCS. Dans ce cas, l'échange des messages n'est pas optimisé.

Un des buts de la présente invention est d'apporter des améliorations par rapport à l'état de la technique.

Un objet de l'invention est un procédé d'échange de messages mis en oeuvre par un terminal d'un utilisateur apte à transmettre un message via un réseau parmi : un premier réseau et un deuxième réseau, le procédé d'échange de messages comporte, lorsque le terminal de l'utilisateur est dans un deuxième mode de transmission, utilisant le deuxième réseau, pour un terminal d'un contact, un déclenchement d'un basculement du terminal de l'utilisateur dans un premier mode de transmission, utilisant le premier réseau, pour le terminal du contact dès réception d'une notification, au terminal de l'utilisateur, de connexion au premier réseau du terminal du contact provenant d'un serveur de messagerie sur le premier réseau, la notification de connexion étant reçue du serveur de messagerie par le terminal de l'utilisateur dès réception par le serveur de messagerie d'un message du terminal du contact via le premier réseau. Ainsi, le retour à l'utilisation du premier réseau par le terminal de l'utilisateur ne dépend que d'un seul message : la notification de connexion. Les échanges pour déterminer les capacités du terminal du contact, sont ainsi réduits puisque cette notification est envoyée uniquement lorsque la connexion du terminal du contact au premier réseau est effective. L'invention permet donc de réduire l'utilisation des ressources.

Avantageusement, le basculement est effectué suite à une détection, par le serveur de messagerie, de connexion du terminal du contact au premier réseau. Ainsi, le retour à l'utilisation du premier réseau par le terminal de l'utilisateur ne dépend pas de l'envoi périodique de requêtes sur les capacités du terminal du contact et de l'analyse par le terminal de l'utilisateur d'une réponse du terminal du contact, notamment lors d'une méthode de polling, mais d'une détection de connexion par le serveur de messagerie. L'invention permet donc de réduire l'utilisation des ressources des terminaux et du premier réseau.

Avantageusement, le premier réseau est un réseau de données et le deuxième réseau est un réseau circuit. Ainsi, les échanges de messages sont plus rapides grâce au réseau de données utilisé comme réseau par défaut et le réseau de repli plus sûr en termes de connectivité pour les terminaux nomades.

Un objet de l'invention est également un dispositif de communication de messages d'un terminal d'un utilisateur, le dispositif de communication apte à transmettre un message via un réseau parmi : un premier réseau et un deuxième réseau, le dispositif de communication comportant un contrôleur apte à déclencher, sur réception d'une notification au terminal de l'utilisateur de connexion au premier réseau d'un terminal d'un contact provenant d'un serveur de messagerie sur le premier réseau, un basculement du terminal de l'utilisateur dans un premier mode de transmission, utilisant le premier réseau, pour le terminal du contact, lorsque le terminal de l'utilisateur est dans un deuxième mode de transmission, utilisant le deuxième réseau, pour un terminal d'un contact, la notification de connexion étant reçue par le terminal de l'utilisateur du serveur de messagerie dès réception par le serveur de messagerie d'un message du terminal du contact via le premier réseau

Un objet de l'invention est encore un terminal d'un utilisateur comportant un dispositif de communication de messages apte à transmettre un message via un réseau parmi : un premier réseau et un deuxième réseau, le terminal de l'utilisateur comportant un contrôleur apte à déclencher, sur réception d'une notification au terminal de l'utilisateur de connexion au premier réseau d'un terminal d'un contact provenant d'un serveur de messagerie sur le premier réseau, un basculement du terminal de l'utilisateur dans un premier mode de transmission, utilisant le premier réseau, pour le terminal du contact, lorsque le terminal de l'utilisateur est dans un deuxième mode de transmission, utilisant le deuxième réseau, pour un terminal d'un contact, la notification de connexion étant reçue par le terminal de l'utilisateur du serveur de messagerie dès réception par le serveur de messagerie d'un message du terminal du contact via le premier réseau

Un objet de l'invention est aussi un procédé de gestion de messages mis en oeuvre par un serveur de messagerie sur un premier réseau, le procédé de gestion de messages comporte, lorsqu'un terminal d'un utilisateur est dans un deuxième mode de transmission, utilisant un deuxième réseau, pour un terminal d'un contact une émission au terminal de l'utilisateur d'une notification de connexion au premier réseau du terminal du contact dès réception d'un message du terminal du contact via le premier réseau, la notification de connexion déclenchant un basculement du terminal de l'utilisateur dans un premier mode de transmission, utilisant le premier réseau, pour le terminal du contact. Ainsi, le retour à l'utilisation du premier réseau par le terminal de l'utilisateur ne dépend que d'un seul message : la notification de connexion. Ainsi, les échange pour déterminer les capacités du terminal du contact, sont réduits puisque cette notification étant envoyée uniquement lorsque la connexion du terminal du contact au premier réseau est effective. L'invention permet donc de réduire l'utilisation des ressources.

Avantageusement, le procédé de gestion de messages comporte, lorsqu'un terminal d'un utilisateur est dans un deuxième mode de transmission pour un terminal d'un contact, une détection d'une connexion au premier réseau du terminal du contact, suite à laquelle l'émission de la notification de connexion est effectuée. Ainsi, le retour à l'utilisation du premier réseau par le terminal de l'utilisateur ne dépend pas de l'envoi périodique de requêtes sur les capacités du terminal du contact et de l'analyse par le terminal de l'utilisateur d'une réponse du terminal du contact, notamment lors d'une méthode de polling, mais d'une détection de connexion par le serveur de messagerie. L'invention permet donc de réduire l'utilisation des ressources des terminaux et du premier réseau.

Avantageusement, la détection de connexion au premier réseau du terminal du contact comporte une détection d'un message provenant du terminal du contact via le premier réseau. Ainsi, tout message sur le premier réseau provenant du terminal du contact détecté par le serveur de messagerie, quel que soit le type de message et le destinataire du message, déclenchera le basculement dans le premier mode de transmission du terminal de l'utilisateur pour l'échange de message avec le terminal du contact.

Avantageusement, la détection de connexion au premier réseau du terminal du contact comporte une détection d'une réception par le serveur de messagerie d'un message de commande de suppression d'un message stocké sur le serveur de messagerie, le message de commande provenant du terminal du contact. Ainsi, une tentative d'envoi de message sur le premier réseau du terminal du contact à un terminal d'un interlocuteur détectée par le serveur de messagerie du terminal de l'utilisateur déclenchera le basculement dans le premier mode de transmission du terminal de l'utilisateur pour l'échange de message avec le terminal du contact. Avantageusement, le procédé de gestion de messages comporte, lorsqu'un terminal d'un utilisateur est dans un deuxième mode de transmission pour un terminal d'un contact, une génération d'une notification de connexion au premier réseau d'un terminal d'un contact d'un terminal d'un utilisateur, la génération de la notification de connexion fournissant la notification de connexion générée à l'émission au terminal de l'utilisateur. Ainsi, la notification de connexion émise pourra être fonction du terminal du contact et/ou du terminal de l'utilisateur.

Avantageusement, la génération de notification de connexion est déclenchée par un évènement relatif à une connexion au premier réseau du terminal du contact parmi :
- La détection de connexion au premier réseau du terminal du contact ;
- Un basculement dans un deuxième mode de transmission du terminal de l'utilisateur pour le terminal du contact.

Dans le premier cas, le déclenchement de la génération par la détection de connexion, l'émission pourra être déclenchée indirectement par la détection de connexion en recevant la notification de connexion générée sur commande de cette détection de connexion. Ainsi, la notification générée n'aura pas à être conservée avant son émission. En outre, dans le cas de la première option si le terminal de l'utilisateur n'est pas connecté au premier réseau lors de cette détection et de la deuxième option : basculement dans le deuxième mode de transmission, la notification de connexion pourra être générée de manière non concomitante à son émission. Cela permet de réduire la latence entre la détection de la connexion du terminal du contact au premier réseau et le basculement du terminal de l'utilisateur dans le premier mode de transmission pour le terminal du contact.

Avantageusement, une mise en oeuvre de l'émission de la notification est fonction d'un état de connexion au premier réseau du terminal de l'utilisateur. Ainsi, si le terminal de l'utilisateur n'est pas connecté au premier réseau au moment où la connexion au premier réseau du terminal du contact est détectée, la notification n'est pas émise immédiatement mais uniquement dès que le terminal de l'utilisateur sera reconnecté au premier réseau évitant une perte d'information et donc la conservation du terminal de l'utilisateur dans le deuxième mode de transmission pour le terminal de contact. Avantageusement, selon une implémentation de l'invention, les différentes étapes des procédés selon l'invention sont mises en oeuvre par un logiciel ou programme d'ordinateur, ce logiciel comprenant des instructions logicielles destinées à être exécutées par un processeur de données d'un dispositif faisant partie d'un terminal d'un utilisateur ou d'un serveur de messagerie et étant conçus pour commander l'exécution des différentes étapes de ces procédés. L'invention vise donc aussi un programme comprenant des instructions de code de programme pour l'exécution des étapes du procédé d'échange de messages, et/ou du procédé de gestion de messages lorsque ledit programme est exécuté par un processeur. Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore un serveur de messagerie d'un premier réseau comportant un émetteur permettant d'émettre, lorsqu'un terminal d'un utilisateur est dans un deuxième mode de transmission, utilisant un deuxième réseau, pour un terminal d'un contact, vers le terminal de l'utilisateur une notification de connexion au premier réseau du terminal du contact dès réception d'un message du terminal du contact via le premier réseau, la notification de connexion déclenchant un basculement du terminal de l'utilisateur dans un premier mode de transmission, utilisant le premier réseau, pour le terminal du contact

Avantageusement, le serveur de messagerie comporte un détecteur de connexion au premier réseau d'un terminal d'un contact apte à déclencher une émission par l'émetteur de la notification de connexion.

Les caractéristiques et avantages de l'invention apparaîtront plus clairement à la lecture de la description, faite à titre d'exemple, et des figures s'y rapportant qui représentent :
- Figures 1a et 1b, des diagrammes d'échange de messages mettant en oeuvre la norme RCS dans le cas où le terminal de l'utilisateur est, respectivement connecté et déconnecté au premier réseau lorsque le terminal d'un contact se reconnecte au premier réseau, selon l'art antérieur,
- Figure 2, un schéma simplifié d'un procédé d'échange de messages mis en oeuvre par un terminal d'un utilisateur selon l'invention,
- Figure 3, un schéma simplifié d'un procédé de gestion de messages mis en oeuvre par un serveur de messagerie selon l'invention,
- Figure 4, une architecture de communication de messages mettant en oeuvre un terminal d'un utilisateur et un serveur de messagerie selon l'invention,
- Figure 5, un diagramme d'échange de messages dans le cas où le terminal de l'utilisateur est déconnecté du premier réseau lorsque le terminal d'un contact se reconnecte au premier réseau, selon l'invention,
- Figure 6, un diagramme d'échange de messages dans le cas où le serveur de messagerie du terminal de l'utilisateur détecté un message sur le premier réseau du terminal d'un contact, selon l'invention.

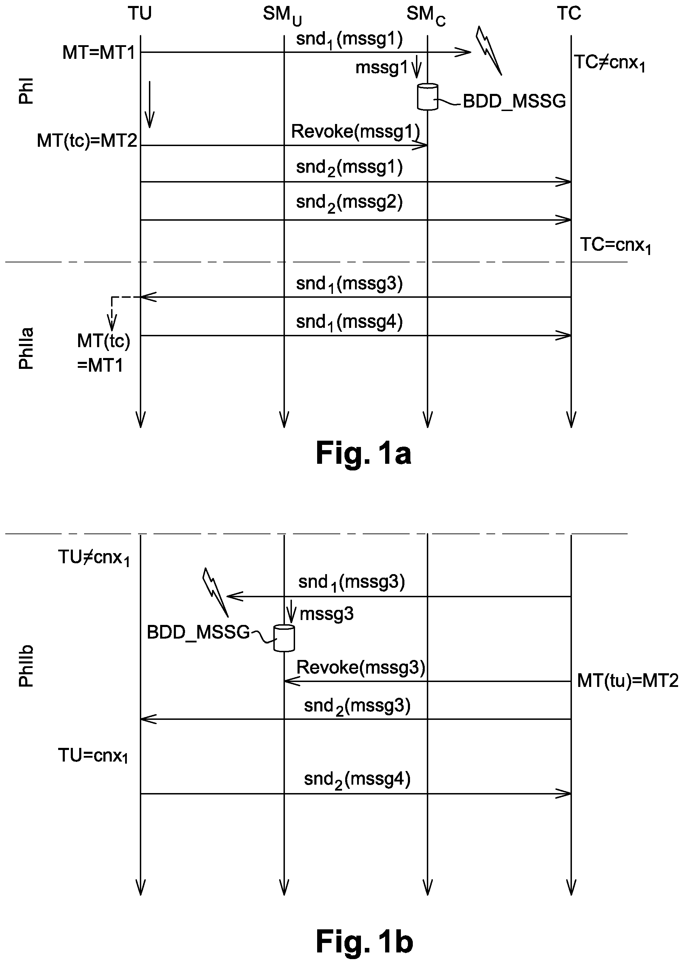

Les figures 1a et 1b illustrent l'art antérieur. En particulier, dans le cas de l'utilisation de la norme RCS sans les SIP OPTIONS. La figure 1a illustre un diagramme d'échange de messages mettant en oeuvre la norme RCS dans le cas où le terminal de l'utilisateur est connecté au premier réseau lorsque le terminal d'un contact se reconnecte au premier réseau, selon l'art antérieur.

Afin de limiter l'utilisation des ressources, notamment par les échanges de capacités des terminaux, notamment par l'usage des SIP OPTIONS tels que prévus par la norme RCS, tout en évitant le blocage d'un terminal d'un utilisateur dans un mode de transmission de repli, la norme RCS prévoit que la réception par le terminal d'un utilisateur d'un message du terminal du contact via le premier réseau déclenche le retour du terminal de l'utilisateur dans un mode de transmission utilisant ce premier réseau pour le terminal du contact.

La figure 1a montre un terminal d'un utilisateur TU échangeant des messages : mssg1, mssg2, mssg3, mssg4 avec un terminal d'un contact TC. La norme RCS prévoit qu'un premier réseau est utilisé comme réseau par défaut pour la transmission de message : le réseau IP et qu'un deuxième réseau comme réseau de repli : réseau SMS. Ainsi, les terminaux RCS sont, par défaut, dans un premier mode de transmission MT=MT1 permettant l'émission de message via le premier réseau. Ainsi, dans un premier temps Ph l comme le montre l'exemple de la figure 1a, le terminal de l'utilisateur TU envoie au terminal d'un contact TC un premier message mssg1 sur le réseau par défaut : le premier réseau, *snd1(mssg1).*

Le terminal du contact TC n'étant pas connecté au premier réseau : TC≠cnx₁, le serveur de messagerie du terminal du contact SM_{C} reçoit le premier message mssg1 et le stocke notamment dans une mémoire temporaire ou une base de données de message BDD_MSSG en vue de le transférer au terminal du contact lorsqu'il sera à nouveau connecté au premier réseau. Le terminal de l'utilisateur TU déclenche alors un décompte d'un laps de temps prédéterminé à l'expiration duquel, si le premier message mssg1 n'a pas été transmis par le serveur de messagerie SM_{C} au terminal du contact TC, le terminal de l'utilisateur TU envoie une révocation du transfert du premier message au serveur de messagerie SM_{C :} *Revoke(mssg1).* Ainsi, le premier message mssg1 est supprimé de la mémoire BDD_MSSG du serveur de messagerie SM_{C}. De manière concomitante, le terminal de l'utilisateur TU bascule dans un deuxième mode de transmission pour le terminal du contact MT(tc)=MT2, puis retransmet le premier message via le deuxième réseau (cette fois-ci) : *send2(mssg1),* en l'occurrence sous forme SMS. Quand le terminal de l'utilisateur TU émet un deuxième message mssg2 à destination du terminal du contact TC, il le fait toujours sur le deuxième réseau : *send2(mssg2)* puisque le terminal de l'utilisateur est toujours dans le deuxième mode de transmission pour le terminal du contact MT(tc)=MT2.

Dans un deuxième temps Ph lia, le terminal du contact s'est reconnecté au premier réseau TC=cnx₁. Si, comme le montre la figure 1a, le terminal du contact TC envoi sur le réseau par défaut, à savoir le premier réseau, un troisième message au terminal de l'utilisateur TU : *snd1(mssg3),* alors la norme RCS prévoit que la réception de ce troisième message provenant du terminal du contact TC sur le premier réseau déclenche le retour du terminal de l'utilisateur dans le premier mode de transmission pour le terminal du contact : MT(tc)=MT1. Ainsi, l'envoi par le terminal de l'utilisateur TU d'un quatrième message au terminal du contact TC se fera en utilisant le premier réseau : *send1(mssg4).*

La figure 1b illustre un diagramme d'échange de messages mettant en oeuvre la norme RCS dans le cas où le terminal de l'utilisateur est déconnecté du premier réseau lorsque le terminal d'un contact se reconnecte au premier réseau, selon l'art antérieur. La première phase Ph l non illustrée correspond à celle de la figure 1a.

Dans un deuxième temps Ph Ilb, le terminal du contact s'est reconnecté au premier réseau TC=cnx_{1.} Comme le montre la figure 1b, le terminal du contact TC envoi sur le réseau par défaut, à savoir le premier réseau, un troisième message au terminal de l'utilisateur TU : *snd1(mssg3).* Si à ce moment-là, le terminal de l'utilisateur TU est déconnecté du premier réseau TU≠cnx1, alors le troisième message ne sera pas remis au terminal de l'utilisateur TU via le premier réseau. Le terminal de l'utilisateur TU n'étant pas connecté au premier réseau : TU≠cnx₁, le serveur de messagerie du terminal de l'utilisateur SM_{U} reçoit le troisième message mssg3 et le stocke notamment dans une mémoire temporaire ou une base de données de message BDD_MSSG en vue de le transférer au terminal de l'utilisateur TU lorsqu'il sera à nouveau connecté au premier réseau. Le terminal du contact TC déclenche alors un décompte d'un laps de temps prédéterminé à l'expiration duquel, si le troisième message mssg3 n'a pas été transmis par le serveur de messagerie SM_{U} au terminal de l'utilisateur TU, le terminal du contact TC envoie une révocation du transfert du troisième message au serveur de messagerie SM_{U :} *Revoke(mssg3).* Ainsi, le troisième message mssg3 est supprimé de la mémoire BDD_MSSG du serveur de messagerie SM_{U}. De manière concomitante, le terminal du contact TC bascule dans un deuxième mode de transmission pour le terminal de l'utilisateur MT(tu)=MT2, puis retransmet le troisième message via le deuxième réseau (cette fois-ci) : *send2(mssg3),* en l'occurrence sous forme SMS.

Si, le terminal de l'utilisateur TU retrouve alors sa couverture par le premier réseau, c'est-à-dire s'il est à nouveau connecté au premier réseau, alors, sauf à avoir reçu des informations via les messages de SIP OPTIONS prévus par la norme RCS, le terminal de l'utilisateur est bloqué dans le deuxième mode de transmission MT(tc)=MT2 et transmettra un quatrième message en utilisant le deuxième réseau *:send2(mssg4)* alors que les deux terminaux : le terminal de l'utilisateur TU et le terminal du contact TC sont connecté au premier réseau. Ainsi, si pour réduire l'utilisation des ressources, l'utilisation des SIP OPTIONS prévue par la norme RCS est supprimée, le risque est que les terminaux restent bloqués dans le mode de transmission de repli dans certaines situations.

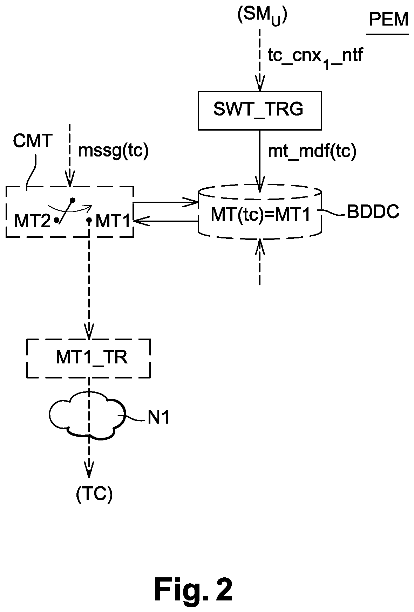

La figure 2 illustre un schéma simplifié d'un procédé d'échange de messages mis en oeuvre par un terminal d'un utilisateur selon l'invention. Le procédé d'échange de messages PEM comporte, lorsque le terminal de l'utilisateur est dans un deuxième mode de transmission pour un terminal d'un contact, un déclenchement d'un basculement SWT_TRG du terminal de l'utilisateur dans un premier mode de transmission pour le terminal du contact MT(tc)=MT1 dès réception d'une notification au terminal de l'utilisateur de connexion au premier réseau N1 du terminal du contact *tc_cnx1_ntf* provenant d'un serveur de messagerie sur le premier réseau SM_{U}.

En particulier, le déclenchement du basculement SWT_TRG est effectué suite à une détection, par le serveur de messagerie SM_{U}, de connexion du terminal du contact TC au premier réseau N1. En particulier, le premier réseau N1 est un réseau de données, notamment un réseau IP et le deuxième réseau N2 un réseau circuit, notamment un réseau cellulaire. En particulier, le déclenchement de basculement SWT_TRG envoie une commande de modification du mode de transmission pour le terminal du contact mt_mdf(tc), notamment à une base de données de contact BDDC, dans laquelle le mode de transmission pour chaque terminal d'un contact est stocké au moins lorsque le mode de transmission est le mode de transmission de repli à savoir le deuxième mode de transmission. Le cas échéant, le procédé d'échange comporte, lors de l'émission d'un message à un terminal d'un contact, une consultation de la base de données de contact BDDC permettant de déterminer le mode de transmission du message au terminal du contact.

Lors de la transmission d'un message à un terminal d'un contact, le message est fourni par défaut à une émission selon un premier mode de transmission c'est-à-dire en utilisant le premier réseau N1. Le procédé d'échange de messages, comporte en particulier, cette émission du message selon le premier mode de transmission. En particulier, lorsque le terminal du contact TC n'est pas connecté au premier réseau N1, le message mssg est fourni à une émission selon un deuxième mode de transmission MT2_TR c'est à dire utilisant le deuxième réseau N2. La fourniture du message à l'émission selon le deuxième mode de transmission est effectuée par une commutation CMT de la fourniture du message de l'émission selon le premier mode de transmission MT1_TR à l'émission selon le deuxième mode de transmission MT2_TR en fonction d'un mode de transmission associé au terminal du contact destinataire du message MT(tc) .

En particulier, le procédé d'échange de messages comporte une détection DCNX1_DTCT par le terminal de l'utilisateur TU que le terminal du contact TC n'est pas connecté au premier réseau N1, notamment par :
- absence de réception d'une notification d'accusé réception ACK, aussi nommé notification de livraison, du message par le terminal du contact TC qui permet au terminal de l'utilisateur TU de savoir que le terminal du contact TC n'est pas connecté au premier réseau N1,
- réception NACK d'une information de non délivrance au terminal du contact TC d'un message envoyé par le terminal de l'utilisateur TU via le premier réseau N1.

En particulier, le déclenchement de basculement SWT_TRG envoi la commande de modification de mode de transmission mt_mdf(tc) à la commutation CMT de fourniture de message qui bascule alors de la fourniture de message à l'émission selon le deuxième mode de transmission MT2_TR à l'émission selon le premier mode de transmission MT1_TR pour l'émission d'un message à destination du terminal du contact TC.

Un mode de réalisation particulier du procédé d'échange de messages est un programme comprenant des instructions de code de programme pour l'exécution des étapes du procédé d'échange de messages selon l'une quelconques des revendications lorsque ledit programme est exécuté par un processeur.

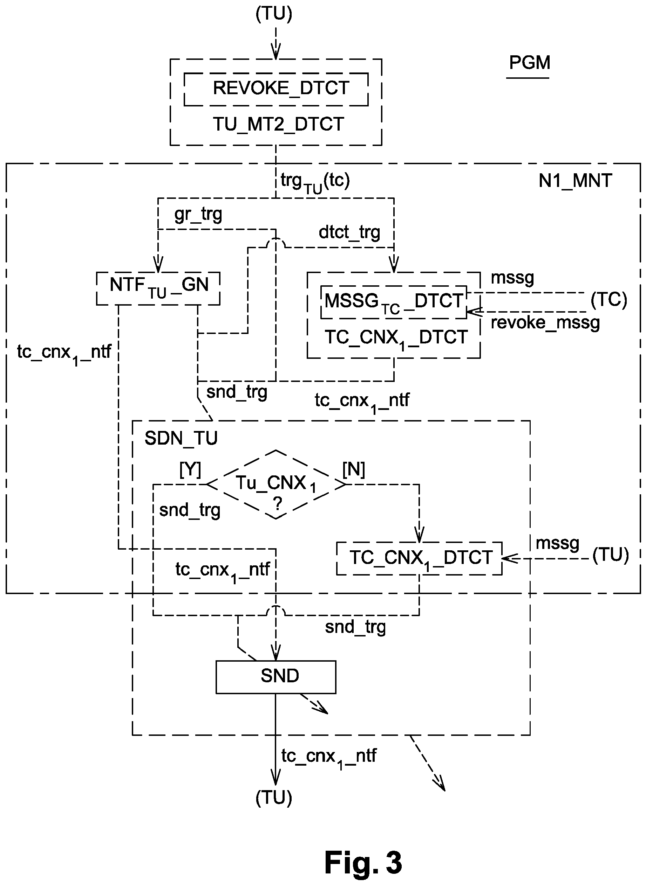

La figure 3 illustre un schéma simplifié d'un procédé de gestion de messages mis en oeuvre par un serveur de messagerie selon l'invention. Le procédé de gestion de messages PGM comporte, lorsqu'un terminal d'un utilisateur TU est dans un deuxième mode de transmission MT2 pour un terminal d'un contact TC, une émission SND au terminal de l'utilisateur TU d'une notification de connexion au premier réseau du terminal du contact tc_cnx1_ntf, la notification de connexion tc_cnx1_ntf déclenchant un basculement SWT_TRG du terminal de l'utilisateur TU dans un premier mode de transmission MT1 pour le terminal du contact TC. En particulier, le procédé de gestion de messages PGM comporte, lorsqu'un terminal d'un utilisateur est dans un deuxième mode de transmission pour un terminal d'un contact, une détection d'une connexion au premier réseau du terminal du contact TC_CNX1_DTCT, suite à laquelle l'émission de la notification de connexion SND est effectuée. En particulier, la détection de connexion au premier réseau du terminal du contact TC_CNX1_DTCT comporte une détection MSSG_{TC}_DTCT d'un message *mssg* provenant du terminal du contact TC via le premier réseau N1. En particulier, la détection de connexion au premier réseau du terminal du contact TC_CNX1_DTCT comporte une détection MSSG_{TC}_DTCT d'une réception par le serveur de messagerie SM d'un message de commande de suppression d'un message stocké sur le serveur de messagerie *revoke_mssg,* le message de commande *revoke_mssg* provenant du terminal du contact TC. En particulier, le procédé de gestion de messages PGM comporte, lorsqu'un terminal d'un utilisateur est dans un deuxième mode de transmission pour un terminal d'un contact, une génération NTF_{TU}_GN d'une notification de connexion au premier réseau d'un terminal d'un contact *tc_cnx1_ntf* d'un terminal d'un utilisateur TU, la génération de la notification de connexion NTF_{TU}_GN fournissant la notification de connexion générée *tc_cnx1_ntf* à l'émission SND au terminal de l'utilisateur TU.

En particulier, la génération de notification de connexion NTF_{TU}_GN est déclenchée par un évènement relatif à une connexion au premier réseau N1 du terminal du contact TC parmi :
- La détection de connexion au premier réseau du terminal du contact TC_CNX1_DTCT;
- Un basculement CMT dans un deuxième mode de transmission MT2 du terminal de l'utilisateur TU pour le terminal du contact TC.

La détection de connexion au premier réseau du terminal du contact TC_CNX1_DTCT permet de détecter un évènement relatif à une première connexion ou une reconnexion du terminal du contact TC au premier réseau tel que :
- Un envoi d'un message sur le premier réseau par le terminal du contact à un terminal d'un interlocuteur du contact ;
- Un envoi d'un message de connexion au premier réseau N1 par le terminal du contact, notamment un message d'enregistrement tel que SIP REGISTER ou Third REGISTER reçu par le serveurs de messagerie SM d'un serveur de contrôle S-CSCF (non illustré), en particulier lorsque le terminal de l'utilisateur TU et le terminal du contact TC partagent le même serveur de messagerie SM;
- Un envoi d'un message de suppression *revoke_mssg* d'un message envoyé par le terminal du contact TC au terminal de l'utilisateur TU sur le premier réseau N1 ;
- Un envoi d'une notification de connexion du terminal du contact au premier réseau par le serveur de messagerie du contact à destination du serveur de messagerie du terminal d'un utilisateur, etc. En particulier, une mise en oeuvre de l'émission de la notification au terminal de l'utilisateur SND_TU est fonction d'un état de connexion au premier réseau du terminal de l'utilisateur TU_CNX₁?.

L'émission SND de la notification *tc_cnx1_ntf* est effectuée lorsque le terminal de l'utilisateur TU est dans un deuxième mode de transmission MT2 pour le terminal du contact TC. En particulier, le procédé de gestion de messages PGM reçoit du terminal de l'utilisateur une information indiquant le basculement du terminal de l'utilisateur TU dans le deuxième mode de transmission MT2 pour le terminal du contact TC. De manière alternative, le procédé de gestion de messages PGM détermine si le terminal de l'utilisateur TU est dans un deuxième mode de transmission MT2 pour le terminal du contact TC. Notamment, le procédé de gestion de messages PGM comporte une détection du basculement du terminal de l'utilisateur dans le deuxième mode de transmission TU_MT2_DTCT. Par exemple, la détection du basculement dans le deuxième mode de transmission TU_MT2_DTCT comporte une détection REVOKE_DTCT des messages de révocation ou de suppression des messages stockés provenant du terminal de l'utilisateur TU. Ainsi, la détermination du basculement dans le deuxième mode de transmission MT2 d'un terminal d'un utilisateur TU pour un terminal d'un contact TC: réception d'une information de basculement, détection du basculement TU_MT2_DTCT déclenche *trgTU(tc)* une surveillance du premier réseau N1_MNT déclenchant l'émission SND d'une notification de connexion au premier réseau du terminal du contact *tc_cnx1_ntf.* Cette surveillance du premier réseau N1_MNT comporte au moins une détection TC_CNX₁_DTCT de connexion du terminal du contact au premier réseau.

En particulier, la détermination du basculement dans le deuxième mode de transmission MT2 d'un terminal d'un utilisateur TU pour un terminal d'un contact TC: réception d'une information de basculement, détection du basculement TU_MT2_DTCT déclenche *trgTU(tc)* la génération de notification de connexion NTF_{TU}_GN, qui déclenche *dtct_trg,* elle-même, la détection TC_CNX₁_DTCT de connexion du terminal du contact au premier réseau. Dans cette option, le délai entre la connexion au premier réseau du terminal du contact et le basculement du terminal de l'utilisateur dans le premier mode de connexion pour le terminal du contact est optimisé puisque réduit du temps de génération de la notification de connexion NTF_{TU}_GN. Dans ce cas, c'est la détection TC_CNX₁_DTCT de connexion du terminal du contact au premier réseau qui déclenche *snd_trg* directement ou indirectement l'émission SND au terminal de l'utilisateur TU de la notification *tc_cnx1_ntf* fournie par la génération de notification de connexion NTF_{TU}_GN.

De manière alternative, la détermination du basculement dans le deuxième mode de transmission MT2 d'un terminal d'un utilisateur TU pour un terminal d'un contact TC: réception d'une information de basculement, détection du basculement TU_MT2_DTCT déclenche *trgTU(tc)* la détection TC_CNX₁_DTCT de connexion du terminal du contact au premier réseau, qui déclenche *dtct_trg,* elle-même, la génération de notification de connexion NTF_{TU}_GN. Ainsi, les ressources de stockage du serveur de messagerie SM sont optimisées puisque la notification de connexion tc_cnx₁_ntf n'est stockée que si le terminal de l'utilisateur TU n'est pas connecté au premier réseau N1 lors de la génération de la notification de connexion NTF_{TU}_GN. Dans ce cas, c'est la génération de notification de connexion NTF_{TU}_GN qui fournit la notification de connexion *tc_cnx1_ntf* et déclenche *snd_trg* directement ou indirectement son émission SND au terminal de l'utilisateur TU.

Dans le cas d'un déclenchement indirect *snd_trg* de l'émission SND, c'est une émission à un terminal d'un utilisateur SND_TU qui est déclenchée *snd_trg* directement soit par la détection de connexion TC_CNX1_DTCT, soit par la génération de notification de connexion NTFTU_GN, soit par la surveillance du premier réseau N1_MNT. Notamment, l'émission au terminal de l'utilisateur SND_TU comporte l'émission SND de la notification de connexion *tc_cnx1_ntf* au terminal de l'utilisateur TU. Eventuellement, l'émission au terminal de l'utilisateur SND_TU comporte, en outre, une vérification de la connexion du terminal de l'utilisateur au premier réseau TU_CNX1?. Si la connexion du terminal de l'utilisateur au premier réseau TU_CNX1? est vérifiée [Y], c'est-à-dire si le terminal de l'utilisateur TU est connecté au premier réseau N1, alors la vérification TU_CNX1? déclenche *snd_trg* l'émission SND au terminal de l'utilisateur TU de la notification de connexion *tc_cnx1_ntf* fournie par la génération de notification de connexion NTF_{TU}_GN. Si la connexion du terminal de l'utilisateur au premier réseau TU_CNX1? n'est pas vérifiée [N], c'est-à-dire si le terminal de l'utilisateur TU n'est pas connecté au premier réseau N1, alors la vérification TU_CNX1? déclenche une détection de connexion du terminal de l'utilisateur au premier réseau TU_CNX1_DTCT. Notamment, la réception par le serveur de messagerie d'un message *mssg* provenant du terminal de l'utilisateur TU via le premier réseau N1 permet de détecter une telle connexion au premier réseau. Le message est, par exemple, un message d'enregistrement sur le premier réseau N1, tel que SIP REGISTER. La détection de connexion du terminal de l'utilisateur au premier réseau TU_CNX1_DTCT déclenche *snd_trg* l'émission SND au terminal de l'utilisateur TU de la notification de connexion *tc_cnx1_ntf* fournie par la génération de notification de connexion NTF_{TU}_GN, et éventuellement stockée dans une mémoire du serveur de messagerie. En particulier, la surveillance du premier réseau N1_MNT comporte aussi la vérification TU_CNX1? et, si la connexion du terminal de l'utilisateur au premier réseau TU_CNX1? n'est pas vérifiée [N], la détection de connexion du terminal de l'utilisateur au premier réseau TU_CNX1_DTCT.

Un exemple de réalisation du procédé de gestion de message pourrait utiliser, comme émission de notification de connexion, la fourniture, aussi nommé fonction « push » en anglais, d'un procédé de stockage et transfert mis en oeuvre par le serveur de messagerie, notamment la fonction « store&forward » ou « push enabler » telle que prévue dans certaine norme : ex. la norme RCS, OMA, etc. Ainsi, la fonction de fourniture ou « push » pourrait envoyée en plus des messages stockés par le serveur de messagerie, notamment dans l'attente d'une reconnexion du terminal du destinataire, un nouveau type de contenu à savoir les notifications *tc_cnx1_nft* de connexion des contacts au premier réseau telles que prévues par l'invention. En outre, si nécessaire, le stockage du procédé de stockage et transfert mis en oeuvre par le serveur de messagerie, notamment la fonction « store&forward » ou « push enabler » telle que prévue dans certaine norme : ex. la norme RCS, OMA, etc. pourra être utilisé pour conserver la notification de connexion générée par le procédé de gestion de message dans l'attente du déclenchement de l'émission de la notification de connexion.

Dans le cas où le terminal de l'utilisateur TU et le terminal du contact TC ne partagent pas le même serveur de messagerie SM, le serveur de messagerie du terminal du contact SM_{C} peut mettre en oeuvre une détection de connexion du contact au premier réseau TC_CNX₁_DTCT déclenchant une émission SND d'une notification de connexion du terminal du contact TC au premier réseau N1. L'émission par le serveur de messagerie du contact SM_{C} au premier réseau est effectuée à destination du serveur de messagerie du terminal d'un utilisateur SM_{U} ayant basculé dans un deuxième mode de transmission MT2 pour le terminal du contact TC. Une réception par le serveur de messagerie du terminal de l'utilisateur SM_{U} de la notification de connexion du terminal du contact au premier réseau *tc_cnx1_ntf, tc_cnx1_ntf** constitue, notamment, la détection de connexion du terminal du contact au premier réseau TC_CNX₁_DTCT par le serveur de messagerie du terminal de l'utilisateur SM_{U} déclenchant l'émission SND, par le serveur de messagerie du terminal de l'utilisateur SM_{U}, d'une notification de connexion du terminal du contact au premier réseau *tc_cnx1_ntf.* La notification de connexion *tc_cnx1_ntf* est émise par le serveur de messagerie du terminal de l'utilisateur SM_{U} à destination du terminal de l'utilisateur TU déclenchant le basculement dans le premier mode de transmission SWT_TRG du terminal de l'utilisateur TU pour le terminal du contact TC. En particulier, soit le serveur de messagerie du terminal de l'utilisateur SM_{U} relaie la notification de connexion reçue *tc_cnx1_ntf* du serveur de messagerie du terminal du contact SM_{C}, soit le serveur de messagerie du terminal de l'utilisateur SM_{U} génère NTF_{TU}_GN une nouvelle notification de connexion *tc_cnx1_ntf* suite à la réception de la notification de connexion reçue *tc_cnx1_ntf* * du serveur de messagerie du terminal du contact SM_{C}, aussi appelée notification inter-opérateur *tc_cnx1_ntf*.*

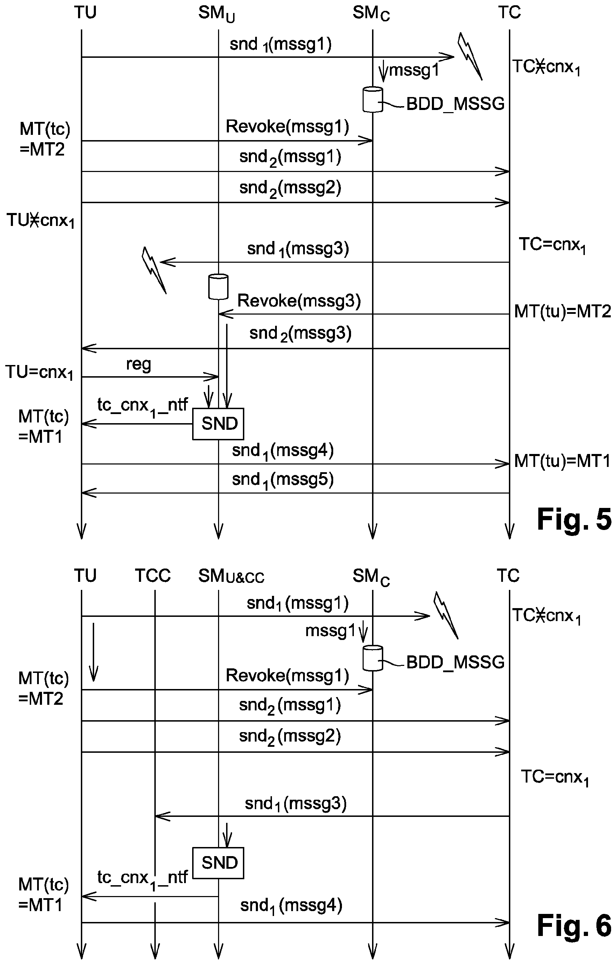

A noter : le procédé de gestion de messages PGM peut aussi être mis en oeuvre par le serveur de messagerie du terminal du contact SM_{C} (cf. figures 5, 6), et le procédé d'échange de messages PEM par le terminal du contact TC qui devient alors le terminal de l'utilisateur revendiqué. Ainsi, la description et les revendications seront lues en remplaçant le terminal de l'utilisateur par le terminal du contact et, inversement, le terminal du contact par le terminal de l'utilisateur.

Un mode de réalisation particulier du procédé de gestion de messages est un programme comprenant des instructions de code de programme pour l'exécution des étapes du procédé de gestion de messages selon l'une quelconques des revendications lorsque ledit programme est exécuté par un processeur.

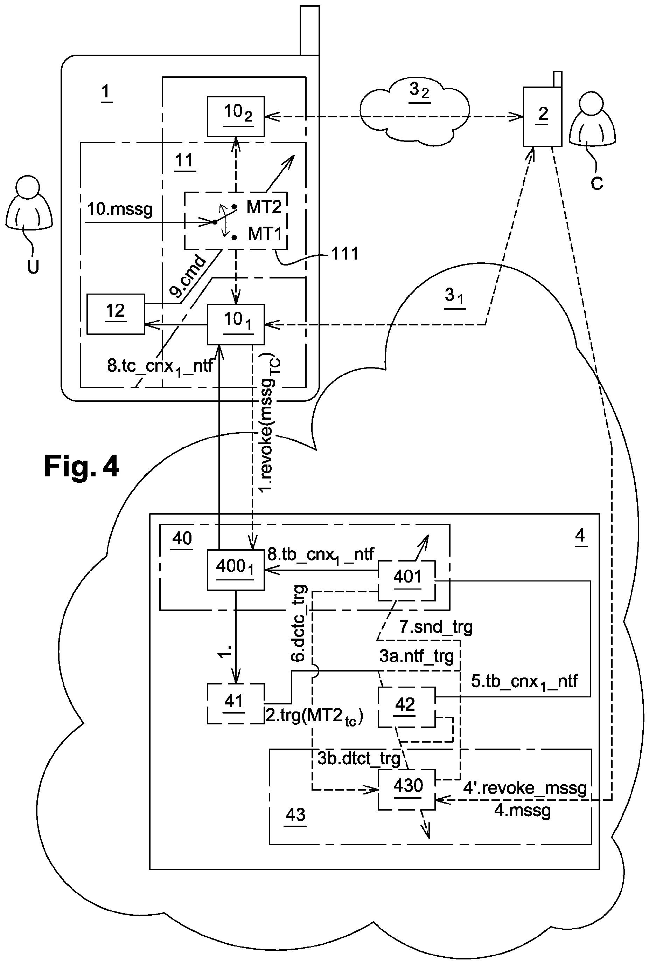

La figure 4 illustre une architecture de communication de messages mettant en oeuvre un terminal d'un utilisateur et un serveur de messagerie selon l'invention. Un objet de l'invention est un dispositif de communication de messages 11. Le dispositif de communication de messages 11 est implémenté dans un terminal 1 d'un utilisateur U. Le dispositif de communication 11 transmet un message *mssg* via un réseau 3₁, 3₂ parmi : un premier réseau 3₁ et un deuxième réseau 3₂. Le dispositif de communication 11 comporte un contrôleur 12 déclenchant *cmd,* sur réception d'une notification *tc_cnx1_ntf* au terminal de l'utilisateur 1 de connexion au premier réseau du terminal du contact provenant d'un serveur de messagerie 4 sur le premier réseau 3₁, un basculement du terminal de l'utilisateur 1 dans un premier mode de transmission MT1 pour un terminal 2 d'un contact C, lorsque le terminal de l'utilisateur 1 est dans un deuxième mode de transmission MT2 pour le terminal du contact 2. En particulier, le dispositif de communication de messages 11 comporte un commutateur 111 permettant de fournir un message à un premier transmetteur 10₁, c'est-à-dire un transmetteur sur un premier réseau, ou un deuxième transmetteur 10₂, c'est-à-dire un transmetteur sur un deuxième réseau, en fonction du mode de transmission du commutateur 111, respectivement le premier mode de transmission MT1 ou le deuxième mode de transmission MT2. Le contrôleur 12 commande *cmd* alors, sur réception d'une notification *tc_cnx1_ntf* de connexion au premier réseau du terminal du contact, le basculement du commutateur 111 dans un premier mode de transmission MT1 lors de l'émission d'un message à destination du terminal du contact 2.

Eventuellement, le dispositif de communication de messages 11 comporte une base de données de contact 12 (non illustrée). Soit, sont inscrits, dans cette base de données de contact 12, au moins les terminaux des contacts 2 lorsqu'ils ne sont pas connectés au premier réseau 3₁. Dans ce cas, le commutateur 111 est, par défaut dans le premier mode de transmission, et consulte, pour le terminal du contact 2 auquel le message *mssg* est destiné, la base de données de contact 12. Si le terminal du contact 2 est inscrit dans la base 12, le commutateur 12 bascule dans le deuxième mode de transmission MT2. Alors, sur réception d'une notification *tc_cnx1_ntf* de connexion au premier réseau du terminal du contact, le contrôleur 12 commande *cmd* la suppression du terminal du contact 2 da la base de données 12, basculant le terminal de l'utilisateur 1 dans le premier mode de transmission pour le terminal du contact 2. Ainsi, le commutateur 111 consultant, pour le terminal du contact 2 auquel un message *mssg* est destiné, la base de données de contact 12 et n'y trouvant pas le terminal du contact 2, reste, par défaut, dans le premier mode de transmission MT1 pour l'émission du message à destination du terminal du contact 2. Soit, sont inscrits, dans cette base de données de contact 12, les terminaux 2 de tous les contacts du terminal de l'utilisateur quelles que soient leurs connexions, et pour chaque terminal d'un contact 2, lui est associé un mode de transmission : par défaut, le premier mode de transmission MT1 et, lorsque le terminal du contact 2 n'est pas connecté au premier réseau 3₁, le deuxième mode de transmission MT2. Dans ce cas, lorsque le terminal de l'utilisateur 1 est dans un deuxième mode de transmission pour un terminal d'un contact 2, c'est-à-dire lorsque le mode de transmission associé au terminal du contact 2 est le deuxième mode de transmission MT2 dans la base de données de contact 12, sur réception d'une notification *tc_cnx1_ntf* de connexion au premier réseau du terminal du contact, le contrôleur 12 commande *cmd* la modification du mode de transmission associé au terminal du contact 2 dans la base de données 12, basculant le terminal de l'utilisateur 1 dans le premier mode de transmission pour le terminal du contact 2. Ainsi, le commutateur 111 consultant, pour le terminal du contact 2 auquel un message *mssg* est destiné, la base de données de contact 12 et y lit que le mode de transmission associé au terminal du contact 2 est le premier mode de transmission, et reste dans le mode de transmission par défaut : le premier mode de transmission MT1 pour l'émission du message à destination du terminal du contact 2.

En particulier, le dispositif de communication de messages 11 comporte un transmetteur de messages sur un premier réseau 10₁ et un transmetteur de messages sur un deuxième réseau 10₂.

Un autre objet de l'invention est un terminal d'un utilisateur 1 qui comporte :
- un dispositif de communication de messages 11 transmettant un message *mssg* via un réseau parmi : un premier réseau 3₁ et un deuxième réseau3₂ ; et
- un contrôleur 12 déclenchant *cmd,* sur réception d'une notification *tc_cnx1_ntf* au terminal de l'utilisateur 1 de connexion au premier réseau du terminal du contact provenant d'un serveur de messagerie 4 sur le premier réseau 3₁, un basculement du terminal de l'utilisateur 1 dans un premier mode de transmission MT1 pour un terminal d'un contact 2, lorsque le terminal de l'utilisateur 1 est dans un deuxième mode de transmission MT2 pour le terminal du contact 2.

Ainsi, le contrôleur 12 est soit implémenté directement dans le terminal de l'utilisateur 1 soit dans le dispositif de communication de messages 11 comme décrit ci-dessus.

En particulier, le dispositif de communication de messages 11 comporte un commutateur 111 permettant de fournir un message à un premier transmetteur 10₁, c'est-à-dire un transmetteur sur un premier réseau, ou un deuxième transmetteur 10₂, c'est-à-dire un transmetteur sur un deuxième réseau, en fonction du mode de transmission du commutateur 111, respectivement le premier mode de transmission MT1 ou le deuxième mode de transmission MT2. Le contrôleur 12 commande *cmd* alors, sur réception d'une notification *tc_cnx1_ntf* de connexion au premier réseau du terminal du contact, le basculement du commutateur 111 dans un premier mode de transmission MT1 lors de l'émission d'un message à destination du terminal du contact 2. Eventuellement, le terminal de l'utilisateur 1 ou le dispositif de communication de messages 11 du terminal de l'utilisateur 1 comporte une base de données de contact 12 (non illustrée) telle que décrite précédemment. En particulier, le terminal de l'utilisateur 1 comporte un transmetteur de messages sur un premier réseau 10₁ et un transmetteur de messages sur un deuxième réseau 10₂ soit implémenté directement dans le terminal de l'utilisateur 1 soit dans le dispositif de communication 11 du terminal de l'utilisateur 1.

L'architecture de communication comporte outre :
- un terminal 1 d'un utilisateur U,
- un terminal 2 d'un contact C, et
- deux réseaux de communication 3₁ et 3₂ permettant, chacun, de transmettre des messages entre le terminal de l'utilisateur 1 et le terminal du contact 2 lorsqu'ils sont connectés au réseau,
- au moins un serveur de messagerie 4 sur le premier réseau 3₁.

Le serveur de messagerie 4 d'un premier réseau 3₁ comporte un émetteur 400₁ permettant d'émettre, lorsqu'un terminal d'un utilisateur 1 est dans un deuxième mode de transmission MT2 pour un terminal d'un contact 2, vers le terminal de l'utilisateur 1 une notification de connexion au premier réseau du terminal du contact *8.tc_cnx1_ntf,* la notification de connexion *8.tc_cnx1_ntf* déclenchant *9.cmd* un basculement du terminal de l'utilisateur 1 dans un premier mode de transmission MT1 pour le terminal du contact 2. En particulier, le serveur de messagerie 4 comporte un détecteur 430 de connexion au premier réseau d'un terminal d'un contact déclenchant une émission par l'émetteur 400₁ de la notification de connexion *8.tc_cnx1_ntf.* En particulier, le détecteur 430 de connexion au premier réseau du terminal du contact TC_CNX1_DTCT comporte un détecteur 4301 (non illustré) d'un message *4.mssg* provenant du terminal du contact 2 via le premier réseau 3₁. En particulier, le détecteur 430 de connexion au premier réseau du terminal du contact comporte un détecteur 4302 (non illustré) d'une réception par le serveur de messagerie 4 d'un message de commande de suppression d'un message stocké sur le serveur de messagerie *4'.revoke_mssg,* le message de commande *4'.revoke_mssg* provenant du terminal du contact TC. En particulier, le serveur de messagerie 4 comporte un générateur 42 d'une notification de connexion au premier réseau d'un terminal d'un contact *5.tc_cnx1_ntf* d'un terminal d'un utilisateur 1. Le générateur 42 est mis en oeuvre lorsqu'un terminal d'un utilisateur 1 est dans un deuxième mode de transmission MT2 pour un terminal d'un contact 2. Le générateur 42 de la notification de connexion fournit la notification de connexion générée *5.tc_cnx1_ntf* à l'émetteur 400₁ pour être transmise au terminal de l'utilisateur TU.

En particulier, le générateur 42 de notification de connexion est déclenché par un détecteur d'un évènement relatif à une connexion au premier réseau N1 du terminal du contact TC parmi :
- un détecteur 430 de connexion au premier réseau du terminal du contact 2;
- un détecteur de déconnexion du premier réseau du terminal du contact (non illustré) ;
- Un détecteur 41 du basculement dans un deuxième mode de transmission MT2 du terminal de l'utilisateur 1 pour le terminal du contact 2, par exemple un détecteur de réception d'un message *1.revoke(mssg_{TC})* de révocation d'un message du terminal de l'utilisateur à destination du terminal du contact.

Le détecteur 430 de connexion au premier réseau du terminal du contact permet de détecter un évènement relatif à une première connexion ou une reconnexion du terminal du contact TC au premier réseau tel que :
- Un envoi d'un message *4.mssg* sur le premier réseau par le terminal du contact à un terminal d'un interlocuteur du contact ;
- Un envoi d'un message de connexion au premier réseau N1 par le terminal du contact, notamment un message d'enregistrement tel que SIP REGISTER, lorsque le terminal de l'utilisateur 1 et le terminal du contact 2 partagent le même serveur de messagerie 4;
- Un envoi d'un message de suppression *4'.revoke_mssg* d'un message envoyé par le terminal du contact 2 au terminal de l'utilisateur TU sur le premier réseau 3₁ ; etc.

En particulier, le serveur de messagerie 4 comporte un fournisseur 401 de la notification de connexion à l'émetteur sur le premier réseau 400₁ activé en fonction d'un état de connexion au premier réseau du terminal de l'utilisateur 1.

Dans l'exemple illustré, l'émetteur au terminal de l'utilisateur 40 comporte l'émetteur sur le premier réseau 400₁ et un fournisseur 401 de la notification de connexion à l'émetteur sur le premier réseau 400₁ activé en fonction d'un état de connexion au premier réseau du terminal de l'utilisateur 1. Ainsi, l'émetteur de la notification au terminal de l'utilisateur 40 (non illustré) est activé en fonction d'un état de connexion au premier réseau du terminal de l'utilisateur 1. L'émetteur sur le premier réseau 400₁ transmet la notification *tc_cnx1_ntf* lorsque le terminal de l'utilisateur 1 est dans un deuxième mode de transmission MT2 pour le terminal du contact 2. En particulier, le serveur de messagerie 4 reçoit du terminal de l'utilisateur 1 une information, tel qu'un message de révocation *1.revoke(mssg_{TC}),* indiquant le basculement du terminal de l'utilisateur TU dans le deuxième mode de transmission MT2 pour le terminal du contact TC.

De manière alternative, le serveur de messagerie 4 détermine si le terminal de l'utilisateur 1 est dans un deuxième mode de transmission MT2 pour le terminal du contact 2. Notamment, le serveur de messagerie 4 comporte un détecteur 41 du basculement du terminal de l'utilisateur dans le deuxième mode de transmission. Par exemple, le détecteur 41 du basculement dans le deuxième mode de transmission comporte un détecteur des messages de révocation ou de suppression des messages stockés provenant du terminal de l'utilisateur 1. Ainsi, le détecteur 41 déterminant un basculement dans le deuxième mode de transmission MT2 d'un terminal d'un utilisateur 1 pour un terminal d'un contact 2: réception d'une information de basculement, détection du basculement déclenche *2.trg(MT2_{TC})* un moniteur du premier réseau 43 (non illustré) déclenchant une émission par l'émetteur sur le premier réseau 400₁ d'une notification de connexion au premier réseau du terminal du contact *8.tc_cnx1_ntf.* Ce moniteur du premier réseau 43 comporte au moins un détecteur 430 de connexion du terminal du contact au premier réseau.

En particulier, le détecteur 41 du basculement dans le deuxième mode de transmission MT2 d'un terminal d'un utilisateur 1 pour un terminal d'un contact 2: réception d'une information de basculement, détection du basculement déclenche *2.trg(MT2_{TC})* le générateur 42 de notification de connexion, qui déclenche *3b.dtdt_trg,* lui-même, le détecteur 430 de connexion du terminal du contact au premier réseau. Dans ce cas, c'est le détecteur 430 de connexion du terminal du contact au premier réseau qui déclenche *7.snd_trg* directement ou indirectement la transmission par l'émetteur sur le premier réseau 400, au terminal de l'utilisateur 1 de la notification *8.tc_cnx1_ntf* fournie par le générateur 42 de notification de connexion. De manière alternative, le détecteur 41 déterminant un basculement dans le deuxième mode de transmission MT2 d'un terminal d'un utilisateur 1 pour un terminal d'un contact 2: réception d'une information de basculement, détection du basculement déclenche *2.trg(MT2_{TC})* le détecteur 430 de connexion du terminal du contact au premier réseau, qui déclenche 3a. *ntf_trg,* lui-même, le générateur 42 de notification de connexion. Dans ce cas, c'est le générateur 42 de notification de connexion qui fournit la notification de connexion *5.tc_cnx1_ntf* et déclenche *7.snd_trg* directement ou indirectement la transmission par l'émetteur sur le premier réseau 400, au terminal de l'utilisateur 1 de la notification *8.tc_cnx1_ntf.*

Dans le cas d'un déclenchement indirect *7.snd_trg* de l'émetteur sur le premier réseau 400₁, c'est l'émetteur à un terminal d'un utilisateur 401 qui est déclenchée *7.snd_trg* directement soit par le détecteur 430 de connexion, soit par le générateur 42 de notification de connexion, soit par le moniteur du premier réseau 43. Notamment, l'émetteur au terminal de l'utilisateur 40 comporte l'émetteur sur le premier réseau 400, de la notification de connexion *tc_cnx1_ntf* au terminal de l'utilisateur 1. Eventuellement, l'émetteur au terminal de l'utilisateur 40 comporte, en outre, un analyseur de connexion 401 vérifiant la connexion du terminal de l'utilisateur au premier réseau. Si la connexion du terminal de l'utilisateur au premier réseau est vérifiée, c'est-à-dire si le terminal de l'utilisateur 1 est connecté au premier réseau 3₁, alors l'analyseur 401 déclenche la transmission par l'émetteur sur le premier réseau 400₁ au terminal de l'utilisateur 1 de la notification de connexion *tc_cnx1_ntf* fournie par le générateur 42 de notification de connexion, notamment en fournissant à l'émetteur sur le premier réseau 400₁ la notification de connexion *8.tc_cnx1_ntf.* Si la connexion du terminal de l'utilisateur au premier réseau n'est pas vérifiée, c'est-à-dire si le terminal de l'utilisateur 1 n'est pas connecté au premier réseau 3₁, alors l'analyseur 401 déclenche un détecteur de connexion du terminal de l'utilisateur au premier réseau. Notamment, soit l'émetteur au terminal de l'utilisateur 40, soit le moniteur du premier réseau 43 (comme illustré par la figure 4) comporte le détecteur 430 de connexion du terminal de l'utilisateur au premier réseau. Le détecteur 430 de connexion du terminal de l'utilisateur au premier réseau déclenche *7.snd_trg* la fourniture par l'analyseur 401 à l'émetteur sur le premier réseau 400₁ de la notification de connexion *8.tc_cnx1_ntf* fournie par le générateur 42 de notification de connexion, qui la transmet alors au terminal de l'utilisateur 1. En particulier, le moniteur 43 du premier réseau comporte aussi l'analyseur 401 et le détecteur 430 de connexion du terminal de l'utilisateur au premier réseau. Dans l'exemple illustré par la figure 4, un même détecteur 430 est utilisé par le serveur de messagerie pour détecter la connexion au premier réseau 3₁ du terminal de l'utilisateur 1 et du terminal du contact 2. Cela est notamment possible lorsque le terminal de l'utilisateur 1 et le terminal du contact 2 partagent le même serveur de messagerie 4. Eventuellement, le serveur de messagerie 4 peut comporter des détecteurs de connexion au premier réseau distincts pour le terminal de l'utilisateur et le terminal du contact (non illustré). Notamment, lorsque le serveur de messagerie 4 est le serveur de messagerie du terminal de l'utilisateur 1 et que le terminal du contact 2 dispose d'un autre serveur de messagerie sur le premier réseau 3₁, le serveur de messagerie 4 peut comporter deux détecteurs de connexion au premier réseau distincts. L'avantage est que le détecteur de connexion du terminal de l'utilisateur peut comporter un simple moniteur des messages d'enregistrement du terminal de l'utilisateur reçu par le serveur de messagerie, alors que le détecteur de connexion du terminal du contact comportera un détecteur de tous les messages en provenance du terminal du contact reçu par le serveur de messagerie 4 du terminal de l'utilisateur : message utile à un terminal d'un interlocuteur (non illustré) partageant avec le terminal de l'utilisateur le serveur de messagerie 4, message de révocation d'un message stocké sur le serveur de messagerie 4, etc.

La figure 5 illustre un diagramme d'échange de messages dans le cas où le terminal de l'utilisateur est déconnecté du premier réseau lorsque le terminal d'un contact se reconnecte au premier réseau, selon l'invention. La figure 5 reprend le cas d'usage de la figure 1b mais avec la mise en oeuvre de l'invention. Ainsi, le terminal de l'utilisateur TU envoie au terminal d'un contact TC un premier message mssg1 sur un réseau par défaut : le premier réseau, *snd1(mssg1).*

Le terminal du contact TC n'étant pas connecté au premier réseau : TC≠cnx₁, le serveur de messagerie du terminal du contact SM_{C} reçoit le premier message mssg1 et le stocke notamment dans une mémoire temporaire ou une base de données de message BDD_MSSG en vue de le transférer au terminal du contact lorsqu'il sera à nouveau connecté au premier réseau. Le terminal de l'utilisateur TU déclenche alors un décompte d'un laps de temps prédéterminé à l'expiration duquel, si le premier message mssg1 n'a pas été transmis par le serveur de messagerie SM_{C} au terminal du contact TC, le terminal de l'utilisateur TU envoie une révocation du transfert du premier message au serveur de messagerie SM_{C :} *Revoke(mssg1).* Ainsi, le premier message mssg1 est supprimé de la mémoire BDD_MSSG du serveur de messagerie SM_{C}. De manière concomitante, le terminal de l'utilisateur TU bascule dans un deuxième mode de transmission pour le terminal du contact MT(tc)=MT2, puis retransmet le premier message via le deuxième réseau (cette fois-ci) : *send2(mssg1),* en l'occurrence sous forme SMS. Quand le terminal de l'utilisateur TU émet un deuxième message mssg2 à destination du terminal du contact TC, il le fait toujours sur le deuxième réseau : *send2(mssg2)* puisque le terminal de l'utilisateur est toujours dans le deuxième mode de transmission pour le terminal du contact MT(tc)=MT2.

Après que le terminal du contact se soit reconnecté au premier réseau TC=cnx₁, il envoi sur le réseau par défaut, à savoir le premier réseau, un troisième message au terminal de l'utilisateur TU : *snd1(mssg3).* Si à ce moment-là, le terminal de l'utilisateur TU est déconnecté du premier réseau TU≠cnx1, alors le troisième message ne sera pas remis au terminal de l'utilisateur TU via le premier réseau. Le terminal de l'utilisateur TU n'étant pas connecté au premier réseau : TU≠cnx₁, le serveur de messagerie du terminal de l'utilisateur SM_{U} reçoit le troisième message mssg3 et le stocke notamment dans une mémoire temporaire ou une base de données de message BDD_MSSG en vue de le transférer au terminal de l'utilisateur TU lorsqu'il sera à nouveau connecté au premier réseau. Le terminal du contact TC déclenche alors un décompte d'un laps de temps prédéterminé à l'expiration duquel, si le troisième message mssg3 n'a pas été transmis par le serveur de messagerie SM_{U} au terminal de l'utilisateur TU, le terminal du contact TC envoie une révocation du transfert du troisième message au serveur de messagerie SM_{U :} *Revoke(mssg3).* Ainsi, le troisième message mssg3 est supprimé de la mémoire BDD_MSSG du serveur de messagerie SM_{U}. De manière concomitante, le terminal du contact TC bascule dans un deuxième mode de transmission pour le terminal de l'utilisateur MT(tu)=MT2, puis retransmet le troisième message via le deuxième réseau (cette fois-ci) : *send2(mssg3),* en l'occurrence sous forme SMS. Si, le terminal de l'utilisateur TU retrouve sa couverture par le premier réseau, c'est-à-dire s'il est à nouveau connecté au premier réseau, alors le terminal TU envoie, par exemple, un message d'enregistrement sur le premier réseau *reg* au serveur de messagerie SM_{U}. Alors, le procédé de gestion de messages selon l'invention transmet SND alors au terminal de l'utilisateur TU une notification *tc_cnx1_nft* indiquant que le terminal du contact à retrouver sa connexion. Le procédé de gestion de messages selon l'invention illustré par la figure 5 comporte une détection de la connexion du terminal du contact au premier réseau, notamment par détection soit d'un message mssg3 du terminal du contact TC au terminal de l'utilisateur TU via le premier réseau N1, soit du message de révocation revoke(mssg3) de ce message mssg3, et, suite à cette détection, une émission SND d'une notification *tc_cnx1_nft* de connexion au premier réseau du terminal du contact conditionné par une détection de connexion au premier réseau du terminal de l'utilisateur, en l'occurrence par réception d'un message d'enregistrement *reg*. Le terminal de l'utilisateur TU activera alors un retour au premier mode de transmission, dans le cas de la norme RCS un retour au « Chat », c'est-à-dire à la messagerie instantanée sur IP, et transmettra un quatrième message en utilisant le premier réseau : *send1(mssg4)* puisque les deux terminaux : le terminal de l'utilisateur TU et le terminal du contact TC sont connecté au premier réseau. Puis, le terminal du contact TC (qui avait lui-même basculé dans un deuxième mode de transmission MT2 pour le terminal de l'utilisateur TU) recevant ce quatrième message mssg 4 du terminal de l'utilisateur TU sur le premier réseau basculera, comme prévu par la norme RCS, dans le premier mode de transmission pour poursuivre la conversation sur le premier réseau en transmettant un cinquième message *snd1(mssg5).*

Dans cet exemple, c'est la connaissance par le serveur de messagerie SM_{U} du terminal de l'utilisateur de l'état de connectivité sur le premier réseau du terminal du contact TC et du terminal de l'utilisateur TU qui entraine la remise de la notification de connexion tc_cnx1_ntf au terminal de l'utilisateur TU. En l'occurrence, c'est respectivement la détection d'un message du terminal du contact vers le terminal de l'utilisateur ou la réception du message de révocation, c'est-à-dire la réception de la commande d'effacement d'un message de la fonction « Store&Forward » de la norme RCS, provenant du terminal du contact TC et la réception du message d'enregistrement du terminal de l'utilisateur au premier réseau, qui déclenche l'émission par le serveur de messagerie SM_{U} au terminal de l'utilisateur TU d'une notification déclenchant le retour du terminal de l'utilisateur TU dans le mode de transmission par défaut pour ses échanges de message avec le terminal du contact TC.

La figure 6 illustre un diagramme d'échange de messages dans le cas où le serveur de messagerie du terminal de l'utilisateur détecte un message sur le premier réseau du terminal d'un contact, selon l'invention. Le terminal de l'utilisateur TU envoie au terminal d'un contact TC un premier message mssg1 sur un réseau par défaut : le premier réseau, *snd1(mssg1).* Le terminal du contact TC n'étant pas connecté au premier réseau : TC≠cnx₁, le serveur de messagerie du terminal du contact SM_{C} reçoit le premier message mssg1 et le stocke notamment dans une mémoire temporaire ou une base de données de message BDD_MSSG en vue de le transférer au terminal du contact lorsqu'il sera à nouveau connecté au premier réseau. Le terminal de l'utilisateur TU déclenche alors un décompte d'un laps de temps prédéterminé à l'expiration duquel, si le premier message mssg1 n'a pas été transmis par le serveur de messagerie SM_{C} au terminal du contact TC, le terminal de l'utilisateur TU envoie une révocation du transfert du premier message au serveur de messagerie SM_{C :} *Revoke(mssg1).* Ainsi, le premier message mssg1 est supprimé de la mémoire BDD_MSSG du serveur de messagerie SM_{C}. De manière concomitante, le terminal de l'utilisateur TU bascule dans un deuxième mode de transmission pour le terminal du contact MT(tc)=MT2, puis retransmet le premier message via le deuxième réseau (cette fois-ci) : *send2(mssg1),* en l'occurrence sous forme SMS. Quand le terminal de l'utilisateur TU émet un deuxième message mssg2 à destination du terminal du contact TC, il le fait toujours sur le deuxième réseau : *send2(mssg2)* puisque le terminal de l'utilisateur est toujours dans le deuxième mode de transmission pour le terminal du contact MT(tc)=MT2.

Si le terminal du contact TC retrouve alors la connexion au premier réseau : TC≠cnx₁, il peut émettre *snd1(mssg3)* sur le premier réseau un troisième message à destination d'un terminal d'un interlocuteur TCC différent du terminal de l'utilisateur TU. Si le terminal de l'interlocuteur TCC et le terminal de l'utilisateur TU partage le même serveur de messagerie SM_{U}, alors le serveur de messagerie peut détecter la connexion au premier réseau du terminal du contact TC dès ce troisième message *mssg3* et ne pas attendre la réception par le terminal de l'utilisateur TU d'un message du terminal du contact TC via le premier réseau comme illustré par la figure1b. Le serveur de messagerie SM_{U} détectant la connexion au premier réseau du terminal du contact TC, envoie SND une notification tc_cnx1_ntf au terminal de l'utilisateur TU. Le terminal de l'utilisateur TU bascule alors dans le mode de transmission par défaut, c'est-à-dire une transmission sur le premier réseau, et peut, dès à présent, envoyer *snd1(mssg4)* un quatrième message au terminal du contact sur le premier réseau.

Par conséquent, la figure 6 montre que la notification de connexion permet de revenir le plus tôt possible sur le réseau par défaut pour les échanges de messages.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur. D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé d'échange de messages mis en oeuvre par un terminal d'un utilisateur(TU, 1) apte à transmettre un message (mssg, mssg1, mssg2, mssg4) via un réseau parmi : un premier réseau (N1, 3₁) et un deuxième réseau (N2, 3₂), le procédé d'échange de messages comportant, lorsque le terminal de l'utilisateur (TU, 1) est dans un deuxième mode de transmission (MT2), utilisant le deuxième réseau, pour un terminal d'un contact (TC, 2), un déclenchement d'un basculement (SWT_TRG) du terminal de l'utilisateur (TU, 1) dans un premier mode de transmission (MT1), utilisant le premier réseau, pour le terminal du contact (TC, 2) dès réception d'une notification (tc_cnx₁_ntf), au terminal de l'utilisateur (TU, 1), de connexion au premier réseau du terminal du contact provenant d'un serveur de messagerie sur le premier réseau (SMu, 4), la notification de connexion étant reçue du serveur de messagerie par le terminal de l'utilisateur dès réception par le serveur de messagerie d'un message du terminal du contact via le premier réseau

2. Procédé d'échange de messages (PEM) selon la revendication précédente, **caractérisé en ce que** le déclenchement du basculement (SWT_TRG) est effectué suite à une détection (TC_CNX₁_DTCT), par le serveur de messagerie (SMu, 4), de connexion du terminal du contact au premier réseau.

3. Procédé d'échange de messages selon l'une quelconque des revendications précédentes **caractérisé en ce que** le premier réseau est un réseau de données et le deuxième réseau un réseau circuit.

4. Dispositif de communication de messages (11) d'un terminal d'un utilisateur (TU, 1), le dispositif de communication (11) apte à transmettre un message (mssg, mssg1, mssg2, mssg4) via un réseau parmi : un premier réseau (N1, 3₁) et un deuxième réseau (N2, 3₂), le dispositif de communication (11) comportant un contrôleur (12) apte à déclencher (cmd), sur réception d'une notification (tc_cnx₁_ntf), au terminal de l'utilisateur (TU, 1), de connexion au premier réseau d'un terminal d'un contact provenant d'un serveur de messagerie sur le premier réseau (SMu, 4), un basculement du terminal de l'utilisateur (TU, 1) dans un premier mode de transmission (MT1), utilisant le premier réseau, pour le terminal du contact (TC, 2), lorsque le terminal de l'utilisateur (TU, 1) est dans un deuxième mode de transmission (MT2), utilisant le deuxième réseau, pour le terminal du contact (TC, 2), la notification de connexion étant reçue par le terminal de l'utilisateur du serveur de messagerie dès réception par le serveur de messagerie d'un message du terminal du contact via le premier réseau.

5. Terminal d'un utilisateur (TU, 1) comportant un dispositif de communication de messages (11) apte à transmettre un message (mssg, mssg1, mssg2, mssg4) via un réseau parmi : un premier réseau (N1, 3₁) et un deuxième réseau (N2, 3₂), le terminal de l'utilisateur (TU, 1) comportant un contrôleur (12) apte à déclencher (cmd), sur réception d'une notification (tc_cnx₁_ntf), au terminal de l'utilisateur (TU, 1), de connexion au premier réseau d'un terminal d'un contact provenant d'un serveur de messagerie sur le premier réseau (SMu, 4), un basculement du terminal de l'utilisateur (TU, 1) dans un premier mode de transmission (MT1), utilisant le premier réseau, pour le terminal du contact (TC, 2), lorsque le terminal de l'utilisateur (TU, 1) est dans un deuxième mode de transmission (MT2), utilisant le deuxième réseau, pour le terminal du contact (TC, 2), la notification de connexion étant reçue par le terminal de l'utilisateur du serveur de messagerie dès réception par le serveur de messagerie d'un message du terminal du contact via le premier réseau

6. Procédé de gestion de messages mis en oeuvre par un serveur de messagerie sur un premier réseau (SMu, 4), le procédé de gestion de messages (PGM) comportant, lorsqu'un terminal d'un utilisateur(TU, 1) est dans un deuxième mode de transmission (MT2), utilisant un deuxième réseau, pour un terminal d'un contact (TC, 2), une émission (SND) au terminal de l'utilisateur (TU, 1) d'une notification de connexion au premier réseau du terminal du contact (tc_cnx₁_ntf) dès réception d'un message du terminal du contact via le premier réseau, la notification de connexion (tc_cnx₁_ntf) déclenchant un basculement (SWT_TRG) du terminal de l'utilisateur (TU, 1) dans un premier mode de transmission (MT1), utilisant le premier réseau, pour le terminal du contact (TC, 2).

7. Procédé de gestion de messages selon la revendication précédente, **caractérisé en ce que** le procédé de gestion de messages (PGM) comporte, lorsqu'un terminal d'un utilisateur (TU, 1) est dans un deuxième mode de transmission (MT2) pour le terminal du contact (TC, 2), une détection d'une connexion au premier réseau du terminal du contact (TC_CNX₁_DTCT), suite à laquelle l'émission de la notification de connexion (SND) est effectuée.

8. Procédé de gestion de messages (PGM) selon la revendication précédente, **caractérisé en ce que** la détection de connexion au premier réseau du terminal du contact (TC_CNX₁_DTCT) comporte une détection d'un message (mssg) provenant du terminal du contact (TC, 2) via le premier réseau (N1, 3₁).

9. Procédé de gestion de messages (PGM) selon l'une quelconque des revendications 7 ou 8, **caractérisé en ce que** la détection de connexion au premier réseau du terminal du contact (TC_CNX₁_DTCT) comporte une détection d'une réception par le serveur de messagerie d'un message de commande de suppression d'un message stocké sur le serveur de messagerie (revoke_mssg), le message de commande (revoke_mssg) provenant du terminal du contact (TC, 2).

10. Procédé de gestion de messages (PGM) selon l'une quelconque des revendications 6 à 9, **caractérisé en ce que** le procédé de gestion de messages (PGM) comporte, lorsque le terminal de l' utilisateur (TU, 1) est dans un deuxième mode de transmission (MT2) pour le terminal du contact (TC, 2), une génération d'une notification de connexion au premier réseau du terminal du contact du terminal de l' utilisateur (NTF_{TU}_GN), la génération de la notification de connexion (NTF_{TU}_GN) fournissant la notification de connexion générée (tc_cnx₁_ntf) à l'émission (SND) au terminal de l'utilisateur (TU, 1).

11. Procédé de gestion de messages (PGM) selon la revendication précédente, **caractérisé en ce que** la génération de notification de connexion (NTF_{TU}_GN) est déclenchée (gr_trg) par un évènement relatif à une connexion au premier réseau du terminal du contact parmi :
• La détection de connexion au premier réseau du terminal du contact (TC_CNX₁_DTCT);
• Un basculement (TU_MT2_DTCT) dans un deuxième mode de transmission (MT2) du terminal de l'utilisateur (TU, 1) pour le terminal du contact (TC, 2).

12. Procédé de gestion de messages (PGM) selon l'une quelconque des revendications 10 ou 11, **caractérisé en ce qu'**une mise en oeuvre de l'émission de la notification (SND) est fonction d'un état de connexion au premier réseau du terminal de l'utilisateur (TU_CNX₁ ?).

13. Programme comprenant des instructions de code de programme pour l'exécution des étapes du procédé d'échange de messages selon l'une quelconque des revendications 1 à 3, et/ou du procédé de gestion de messages selon l'une quelconques des revendications 6 à 12 lorsque ledit programme est exécuté par un processeur.

14. Serveur de messagerie (4) d'un premier réseau (3₁) comportant un émetteur (400₁) permettant d'émettre, lorsqu'un terminal d'un utilisateur (1) est dans un deuxième mode de transmission (MT2), utilisant un deuxième réseau, pour un terminal d'un contact (2), vers le terminal de l'utilisateur (1) une notification de connexion au premier réseau du terminal du contact (tc_cnx1_ntf) dès réception d'un message du terminal du contact via le premier réseau, la notification de connexion (tc_cnx1_ntf) déclenchant (cmd) un basculement du terminal de l'utilisateur (1) dans un premier mode de transmission (MT1), utilisant le premier réseau pour le terminal du contact (2).

15. Serveur de messagerie (4) d'un premier réseau (3₁) selon la revendication précédente, **caractérisé en ce que** le serveur de messagerie (4) comporte un détecteur (430) de connexion au premier réseau d'un terminal d'un contact apte à déclencher une émission par l'émetteur (400₁) de la notification de connexion (tc_cnx1_ntf).

## Patentansprüche

1. Verfahren zum Austausch von Nachrichten, das durch ein Endgerät eines Benutzers (TU, 1) umgesetzt wird, das dazu fähig ist, eine Nachricht (mssg, mssg1, mssg2, mssg4) über ein Netz von: einem ersten Netz (N1, 3₁) und einem zweiten Netz (N2, 3₂) zu übertragen, wobei das Nachrichtenaustauschverfahren, wenn sich das Endgerät des Benutzers (TU, 1) in einem zweiten Übertragungsmodus (MT2), der das zweite Netz verwendet, für ein Endgerät eines Kontakts (TC, 2) befindet, ein Auslösen einer Umschaltung (SWT_TRG) des Endgeräts des Benutzers (TU, 1) in einen ersten Übertragungsmodus (MT1), der das erste Netz verwendet, für das Endgerät des Kontakts (TC, 2) umfasst, sobald an dem Endgerät des Benutzers (TU, 1) eine Benachrichtigung (tc_cnx₁_ntf) über eine Verbindung des Endgeräts des Kontakts zu dem ersten Netz empfangen wird, die von einem Nachrichtenserver in dem ersten Netz (SM_{U}, 4) kommt, wobei das Endgerät des Benutzers die Verbindungsnachricht von dem Nachrichtenserver empfängt, sobald der Nachrichtenserver eine Nachricht von dem Endgerät des Kontakts über das erste Netz empfangen hat.

2. Nachrichtenaustauschverfahren (PEM) nach dem vorhergehenden Anspruch, **dadurch gekennzeichnet, dass** das Auslösen der Umschaltung (SWT_TRG) im Anschluss an eine Erkennung (TC_CNX₁_DTCT), durch den Nachrichtenserver (SM_{U}, 4), einer Verbindung des Endgeräts des Kontakts zu dem ersten Netz erfolgt.

3. Nachrichtenaustauschverfahren nach einem beliebigen der vorhergehenden Ansprüche, **dadurch gekennzeichnet, dass** das erste Netz ein Datennetz ist und das zweite Netz ein verbindungsorientiertes Netz ist.

4. Vorrichtung zur Kommunikation von Nachrichten (11) eines Endgeräts eines Benutzers (TU, 1), wobei die Kommunikationsvorrichtung (11) dazu fähig ist, eine Nachricht (mssg, mssg1, mssg2, mssg4) über ein Netz von: einem ersten Netz (N1, 3₁) und einem zweiten Netz (N2, 3₂) zu übertragen, wobei die Kommunikationsvorrichtung (11) eine Steuereinheit (12) umfasst, die dazu fähig ist, bei Empfang einer Benachrichtigung (tc_cnx₁_ntf), an dem Endgerät des Benutzers (TU, 1), über eine Verbindung eines Endgeräts eines Kontakts zu dem ersten Netz, die von einem Nachrichtenserver in dem ersten Netz (SM_{U}, 4) kommt, eine Umschaltung des Endgeräts des Benutzers (TU, 1) in einen ersten Übertragungsmodus (MT1), der das erste Netz verwendet, für das Endgerät des Kontakts (TC, 2) auszulösen (cmd), wenn sich das Endgerät des Benutzers (TU, 1) in einem zweiten Übertragungsmodus (MT2), der das zweite Netz verwendet, für das Endgerät des Kontakts (TC, 2) befindet, wobei das Endgerät des Benutzers die Verbindungsbenachrichtigung von dem Nachrichtenserver empfängt, sobald der Nachrichtenserver eine Nachricht von dem Endgerät des Kontakts über das erste Netz empfangen hat.

5. Endgerät eines Benutzers (TU, 1), das eine Vorrichtung zur Kommunikation von Nachrichten (11) umfasst, die dazu fähig ist, eine Nachricht (mssg, mssg1, mssg2, mssg4) über ein Netz von: einem ersten Netz (N1, 3₁) und einem zweiten Netz (N2, 3₂) zu übertragen, wobei das Endgerät des Benutzers (TU, 1) eine Steuereinheit (12) umfasst, die dazu fähig ist, bei Empfang einer Benachrichtigung (tc_cnx₁_ntf), an dem Endgerät des Benutzers (TU, 1), über eine Verbindung eines Endgeräts eines Kontakts zu dem ersten Netz, die von einem Nachrichtenserver in dem ersten Netz (SM_{U}, 4) kommt, eine Umschaltung des Endgeräts des Benutzers (TU, 1) in einen ersten Übertragungsmodus (MT1), der das erste Netz verwendet, für das Endgerät des Kontakts (TC, 2) auszulösen (cmd), wenn sich das Endgerät des Benutzers (TU, 1) in einem zweiten Übertragungsmodus (MT2), der das zweite Netz verwendet, für das Endgerät des Kontakts (TC, 2) befindet, wobei das Endgerät des Benutzers die Verbindungsbenachrichtigung von dem Nachrichtenserver empfängt, sobald der Nachrichtenserver eine Nachricht von dem Endgerät des Kontakts über das erste Netz empfangen hat.

6. Verfahren zur Verwaltung von Nachrichten, das durch einen Nachrichtenserver in einem ersten Netz (SM_{U}, 4) umgesetzt wird, wobei das Nachrichtenverwaltungsverfahren (PGM), wenn sich ein Endgerät eines Benutzers (TU, 1) in einem zweiten Übertragungsmodus (MT2), der ein zweites Netz verwendet, für ein Endgerät eines Kontakts (TC, 2) befindet, ein Senden (SND), an das Endgerät des Benutzers (TU, 1), einer Benachrichtigung über eine Verbindung des Endgeräts des Kontakts zu dem ersten Netz (tc_cnx₁_ntf) umfasst, sobald eine Nachricht von dem Endgerät des Kontakts über das erste Netz empfangen wurde, wobei die Verbindungsbenachrichtigung (tc_cnx₁_ntf) eine Umschaltung (SWT_TRG) des Endgeräts des Benutzers (TU, 1) in einen ersten Übertragungsmodus (MT1), der das erste Netz verwendet, für das Endgerät des Kontakts (TC, 2) auslöst.

7. Nachrichtenverwaltungsverfahren nach dem vorhergehenden Anspruch, **dadurch gekennzeichnet, dass** das Nachrichtenverwaltungsverfahren (PGM), wenn sich ein Endgerät eines Benutzers (TU, 1) in einem zweiten Übertragungsmodus (MT2) für das Endgerät des Kontakts (TC, 2) befindet, eine Erkennung einer Verbindung des Endgeräts des Kontakts zu dem ersten Netz (TC_CNX₁_DTCT) umfasst, an deren Anschluss das Senden der Verbindungsbenachrichtigung (SND) erfolgt.

8. Nachrichtenverwaltungsverfahren (PGM) nach dem vorhergehenden Anspruch, **dadurch gekennzeichnet, dass** die Erkennung einer Verbindung des Endgeräts des Kontakts zu dem ersten Netz (TC_CNX₁_DTCT) eine Erkennung einer Nachricht (mssg), die über das erste Netz (N1, 3₁) von dem Endgerät des Kontakts (TC, 2) kommt, umfasst.

9. Nachrichtenverwaltungsverfahren (PGM) nach einem beliebigen der Ansprüche 7 oder 8, **dadurch gekennzeichnet, dass** die Erkennung einer Verbindung des Endgeräts des Kontakts zu dem ersten Netz (TC_CNX₁_DTCT) eine Erkennung eines Empfangs, durch den Nachrichtenserver, einer Befehlsnachricht zum Löschen einer auf dem Nachrichtenserver gespeicherten Nachricht (revoke_mssg) umfasst, wobei die Befehlsnachricht (revoke_mssg) von dem Endgerät des Kontakts (TC, 2) kommt.

10. Nachrichtenverwaltungsverfahren (PGM) nach einem beliebigen der Ansprüche 6 bis 9, **dadurch gekennzeichnet, dass** das Nachrichtenverwaltungsverfahren (PGM), wenn sich das Endgerät des Benutzers (TU, 1) in einem zweiten Übertragungsmodus (MT2) für das Endgerät des Kontakts (TC, 2) befindet, eine Erzeugung einer Benachrichtigung über eine Verbindung des Endgeräts des Kontakts zu dem ersten Netz für das Endgerät des Benutzers (NTF_{TU}_GN) umfasst, wobei die Erzeugung der Verbindungsbenachrichtigung (NTF_{TU}_GN) die erzeugte Verbindungsbenachrichtigung (tc_cnx₁_ntf) beim Senden (SND) an das Endgerät des Benutzers (TU, 1) bereitstellt.

11. Nachrichtenverwaltungsverfahren (PGM) nach dem vorhergehenden Anspruch, **dadurch gekennzeichnet, dass** die Erzeugung einer Verbindungsbenachrichtigung (NTF_{TU}_GN) durch eines von folgenden Ereignissen in Zusammenhang mit einer Verbindung des Endgeräts des Kontakts zu dem ersten Netz ausgelöst (gr_trg) wird:
• der Erkennung einer Verbindung des Endgeräts des Kontakts zu dem ersten Netz (TC_CNX₁_DTCT);
• einer Umschaltung (TU_MT2_DTCT) des Endgeräts des Benutzers (TU, 1) in einen zweiten Übertragungsmodus (MT2) für das Endgerät des Kontakts (TC, 2).

12. Nachrichtenverwaltungsverfahren (PGM) nach einem beliebigen der Ansprüche 10 oder 11, **dadurch gekennzeichnet, dass** eine Umsetzung des Sendens der Benachrichtigung (SND) von einem Verbindungszustand des Endgeräts des Benutzers zu dem ersten Netz (TU_CNX₁ ?) abhängt.

13. Programm, das Programmcodeanweisungen für die Ausführung der Schritte des Nachrichtenaustauschverfahrens nach einem beliebigen der Ansprüche 1 bis 3 und/oder des Nachrichtenverwaltungsverfahrens nach einem beliebigen der Ansprüche 6 bis 12 beinhaltet, wenn das Programm von einem Prozessor ausgeführt wird.

14. Nachrichtenserver (4) eines ersten Netzes (3₁), der einen Sender (400₁) umfasst, der, wenn sich ein Endgerät eines Benutzers (1) in einem zweiten Übertragungsmodus (MT2), der ein zweites Netz verwendet, für ein Endgerät eines Kontakts (2) befindet, das Senden, an das Endgerät des Benutzers (1), einer Benachrichtigung über eine Verbindung des Endgeräts des Kontakts zu dem ersten Netz (tc_cnx1_ntf) gestattet, sobald eine Nachricht von dem Endgerät des Kontakts über das erste Netz empfangen wurde, wobei die Verbindungsbenachrichtigung (tc_cnx1_ntf) eine Umschaltung des Endgeräts des Benutzers (1) in einen ersten Übertragungsmodus (MT1), der das erste Netz verwendet, für das Endgerät des Kontakts (2) auslöst (cmd).

15. Nachrichtenserver (4) eines ersten Netzes (3₁) nach dem vorhergehenden Anspruch, **dadurch gekennzeichnet, dass** der Nachrichtenserver (4) eine Einheit zur Erkennung (430) einer Verbindung eines Endgeräts eines Kontakt zu dem ersten Netz umfasst, die dazu fähig ist, ein Senden der Verbindungsbenachrichtigung (tc_cnx1_ntf) durch den Sender (400₁) auszulösen.

## Claims

1. Message exchange method implemented by a terminal of a user (TU, 1) which is able to transmit a message (mssg, mssg1, mssg2, mssg4) via a network from among: a first network (N1, 3₁) and a second network (N2, 3₂), the message exchange method comprising, when the terminal of the user (TU, 1) is in a second transmission mode (MT2), using the second network, for a terminal of a contact (TC, 2), triggering a switch (SWT_TRG) of the terminal of the user (TU, 1) to a first transmission mode (MT1), using the first network, for the terminal of the contact (TC, 2) upon receipt of a notification (tc_cnx₁_ntf), to the terminal of the user (TU, 1), of connection, to the first network, of the terminal of the contact originating from a messaging server on the first network (SM_{U}, 4), the connection notification being received from the messaging server by the terminal of the user upon receipt, by the messaging server, of a message from the terminal of the contact via the first network.

2. Message exchange method (PEM) according to the preceding claim, **characterized in that** the switch is triggered (SWT_TRG) following detection (TC_CNX₁_DTCT), by the messaging server (SM_{U}, 4), of connection of the terminal of the contact to the first network.

3. Message exchange method according to either one of the preceding claims, **characterized in that** the first network is a data network and the second network is a circuit network.

4. Message communication device (11) of a terminal of a user (TU, 1), the communication device (11) being able to transmit a message (mssg, mssg1, mssg2, mssg4) via a network from among: a first network (N1, 3₁) and a second network (N2, 3₂), the communication device (11) comprising a controller (12) which is able to trigger (cmd), upon receipt of a notification (tc_cnx₁_ntf), to the terminal of the user (TU, 1), of connection, to the first network, of a terminal of a contact originating from a messaging server on the first network (SM_{U}, 4), a switch of the terminal of the user (TU, 1) to a first transmission mode (MT1), using the first network, for the terminal of the contact (TC, 2), when the terminal of the user (TU, 1) is in a second transmission mode (MT2), using the second network, for the terminal of the contact (TC, 2), the connection notification being received by the terminal of the user from the messaging server upon receipt, by the messaging server, of a message from the terminal of the contact via the first network.

5. Terminal of a user (TU, 1) comprising a message communication device (11) which is able to transmit a message (mssg, mssg1, mssg2, mssg4) via a network from among: a first network (N1, 3₁) and a second network (N2, 3₂), the terminal of the user (TU, 1) comprising a controller (12) which is able to trigger (cmd), upon receipt of a notification (tc_cnx₁_ntf), to the terminal of the user (TU, 1), of connection, to the first network, of a terminal of a contact originating from a messaging server on the first network (SM_{U}, 4), a switch of the terminal of the user (TU, 1) to a first transmission mode (MT1), using the first network, for the terminal of the contact (TC, 2), when the terminal of the user (TU, 1) is in a second transmission mode (MT2), using the second network, for the terminal of the contact (TC, 2), the connection notification being received by the terminal of the user from the messaging server upon receipt, by the messaging server, of a message from the terminal of the contact via the first network.

6. Message management method implemented by a messaging server on a first network (SM_{U}, 4), the message management method (PGM) comprising, when a terminal of a user (TU, 1) is in a second transmission mode (MT2), using a second network, for a terminal of a contact (TC, 2), sending (SND) the terminal of the user (TU, 1) a notification of connection, to the first network, of the terminal of the contact (tc_cnx₁_ntf) upon receipt of a message from the terminal of the contact via the first network, the connection notification (tc_cnx₁_ntf) triggering a switch (SWT_TRG) of the terminal of the user (TU, 1) to a first transmission mode (MT1), using the first network, for the terminal of the contact (TC, 2).

7. Message management method according to the preceding claim, **characterized in that** the message management method (PGM) comprises, when a terminal of a user (TU, 1) is in a second transmission mode (MT2) for the terminal of the contact (TC, 2), detecting a connection, to the first network, of the terminal of the contact (TC_CNX₁_DTCT), following which the connection notification is sent (SND).

8. Message management method (PGM) according to the preceding claim, **characterized in that** detecting connection, to the first network, of the terminal of the contact (TC_CNX₁_DTCT) comprises detecting a message (mssg) originating from the terminal of the contact (TC, 2) via the first network (N1, 3₁).

9. Message management method (PGM) according to either one of Claims 7 and 8, **characterized in that** detecting connection, to the first network, of the terminal of the contact (TC_CNX₁_DTCT) comprises detecting receipt, by the messaging server, of a message ordering a message stored on the messaging server to be deleted (revoke_mssg), the order message (revoke_mssg) originating from the terminal of the contact (TC, 2).

10. Message management method (PGM) according to any one of Claims 6 to 9, **characterized in that** the message management method (PGM) comprises, when the terminal of the user (TU, 1) is in a second transmission mode (MT2) for the terminal of the contact (TC, 2), generating a notification of connection, to the first network, of the terminal of the contact from the terminal of the user (NTF_{TU}_GN), generating the connection notification (NTF_{TU}_GN) providing the connection notification (tc_cnx₁_ntf) to be sent (SND) to the terminal of the user (TU, 1).

11. Message management method (PGM) according to the preceding claim, **characterized in that** generating a connection notification (NTF_{TU}_GN) is triggered (gr_trg) by an event relating to a connection, to the first network, of the terminal of the contact from among:
• The detection of connection, to the first network, of the terminal of the contact (TC_CNX₁_DTCT);
• A switch (TU_MT2_DTCT) to a second transmission mode (MT2) of the terminal of the user (TU, 1) for the terminal of the contact (TC, 2).

12. Message management method (PGM) according to either one of Claims 10 and 11, **characterized in that** the notification is sent (SND) as a function of a state of connection, to the first network, of the terminal of the user (TU_CNX₁ ?).

13. Program comprising program code instructions for executing the steps of the message exchange method according to any one of Claims 1 to 3 and/or of the message management method according to any one of Claims 6 to 12 when said program is executed by a processor.

14. Messaging server (4) of a first network (3₁) comprising a transmitter (400₁) making it possible to send, when a terminal of a user (1) is in a second transmission mode (MT2), using a second network, for a terminal of a contact (2), the terminal of the user (1) a notification of connection, to the first network, of the terminal of the contact (tc_cnx1_ntf) upon receipt of a message from the terminal of the contact via the first network, the connection notification (tc_cnx1_ntf) triggering (cmd) a switch of the terminal of the user (1) to a first transmission mode (MT1), using the first network for the terminal of the contact (2) .

15. Messaging server (4) of a first network (3₁) according to the preceding claim, **characterized in that** the messaging server (4) comprises a detector (430) for detecting connection, to the first network, of a terminal of a contact which is able to trigger sending, by the transmitter (400₁), of the connection notification (tc_cnx1_ntf).
